# EUROPEAN PATENT APPLICATION

(11) **EP 1 008 877 A2**
(43) Date of publication of application: **14.06.2000**
(21) Application number: 99124288.4
(22) Date of filing: 06.12.1999
(51) Int. Cl.: G02B 6/293

(54) **Optical multiplexor or demultiplexor**

(30) Priority: 07.12.1998 US 206222
(71) Applicant: JDS FITEL INC., Nepean, Ontario K2G 5W8 (CA)
(72) Inventor: Fu, Xlaoili, Nepean, Ontario, Canada K2E 6J4 (CA); Fan, Chenjun, Nepean, Ontario, Canada K2G 6C4 (CA)
(74) Representative: Frei, Alexandra Sarah

(57) **Abstract**

A multiplexing or demultplexing device is provided which allows for convenient and precise optical alignment of components. A relay lens is disposed between an input lens and a filter such that light traversing large gap is refocused to be collimated at the filter end face. This also allows incident angles upon the filter to be nearly normal or 90 degrees which is preferred in most instances.

## Description

This invention relates to an optical multiplexing device for spatially dispersing collimated multi-wavelength light into individual wavelength bands, each of which can be directed to an individual output waveguide, light detector, etc., or multiplexed such individual wavelength bands to a common waveguide or other destination. In a preferred embodiment the improved multiplexing device is particularly suited as a dense channel wavelength division multiplexing (DWDM) system.

### Background of the Invention

Systems employing optical wavelength division multiplexing (WDM) and demultiplexing (WDDM) are widely employed. A bandwidth, or bundle, of different wavelength sub-ranges, defined also as bands or channels, can be carried over a common fiber optic waveguide and separated into multiple channels, each corresponding to a predetermined wavelength range. Conversely, it is possible to reverse the process and to combine, or multiplex, two or more separate channels into a common output signal.
In a WDM system, it is often advantageous to add an extra band to the signal being demultiplexed, this approach known in the industry as an "add and drop".

In the demultiplexing mode of operation, it is desirable to minimize intensity signal loss and to minimize the dependence on the polarization state of a signal. One of the problems occurring in WDM systems is unsatisfactory isolation of separate filtered channels. Another significant problem with some demultiplexors is that demultiplexed signals often undergo polarization dependent loss (PDL) and polarization mode dispersion (PMD). Another significant disadvantage with some optical demultiplexors is that they cannot be easily tuned for optimum performance during manufacture. For example, it is important in the assembly and manufacture of dense optical demultiplexors to be able to relatively adjust components within a demultiplexor such that a desired wavelength band is demultiplexed with great accuracy within predetermined limits while the components are given a reasonable tolerance. If components are inadvertently mis-aligned or deviate during fabrication of the device, and cannot be easily tuned or re-aligned, the demultplexor will not effectively demultiplex optical signals with a required isolation between channels; as well the insertion loss will be higher and the spectrum won't be flat in the passband.

US patent 4,244,045 to Nosu et al. discloses a multiplexing/demultiplexing system. The system has a plurality of optical filters each of which transmits a predetermined wavelength and reflects other wavelengths. The filters are arranged such that an optical beam is transmitted or reflected via each optical filter in sequence in a zigzag fashion. A light source or light detector is provided behind each optical filter to project or receive a collimated optical beam. Another optical means is provided to connect the multiplexer/demultiplexer with an outside optical filter, wherein the transmission wavelength of each optical filter is different from the others.

US patent No. 4,707,064 to Dobrowolski et al. proposes an optical mixing/demixing device having a series of solid light transmitting blocks, each having opposed, front and rear parallel planar faces coated with optical interference multilayer coatings constituting bandpass filters, and light transmitting faces arranged one on each side of the front planar face. The blocks are arranged side-by-side with a collimating lens on the first light transmitting face and further lenses on each of the second light transmitting faces. The multilayer interference coatings are such as to reflect light of a particular spectral sub-range and transmit the remaining wavelengths. When the device is used in the de-mixing (demultiplexing) mode, a light beam passes through at least one of the blocks wherein a particular spectral band of the beam will be reflected internally several times by the interference coating before exiting the block. The device can function in a multiplexing and demultiplexing mode.

US Patent No. 5,583,683 to Scobey describes a multiplexing device shown in prior art Figs. 1 and 2 having an optical block with an input optical port to admit an input multiple-wavelength collimated light signal, and a variable thickness interference filter forming arrayed ports along the surface of the optical block; the filter is transparent at each of the ports to a different sub-range of the input signal and reflective to other wavelengths. The input light signal is cascaded along a multipoint travel path from one to another of the arrayed multiple ports.

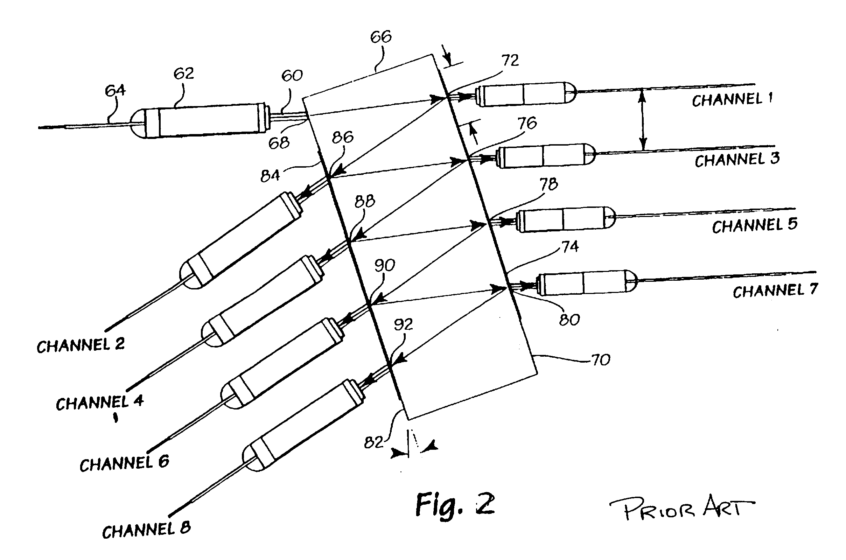

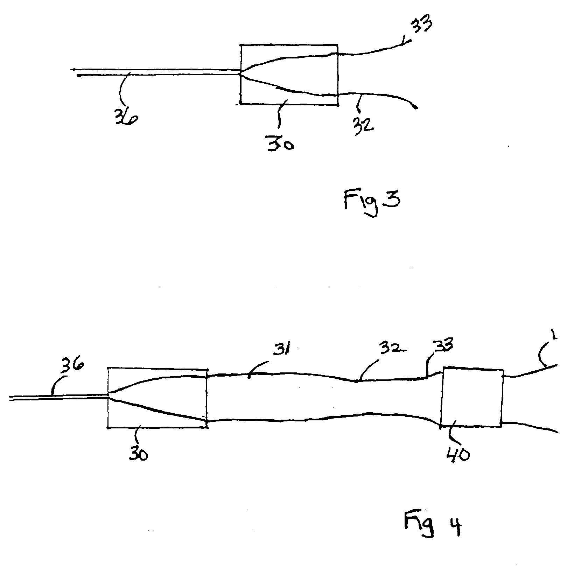

In the system described in the '683 Scobey patent, the angle at which light is incident upon optical filters is approximately 15° from the normal. Notwithstanding, it is well known that in most instances, it is preferred to minimize this angle as much as possible, and under ideal conditions, it is preferred, to have light incident upon a multi-layered optical filter at close to a normal angle of incidence, i.e., such that the beam is approximately 90° to the plane defined by the light-receiving face of the filter. Significantly lessening the angle from 15° to near 0° is not practicable in the design shown in prior art Fig. 2 of the Scobey patent as the diameter of the lenses 36, 44, 46, etc., is a limiting factor. As the lenses have a fixed diameter and are substantially touching one another, placing them closer than they are disposed in Fig. 2, to lessen the angle of incidence in not possible. Nevertheless, although not suggested, it is conceivable to increase the width "a" of the block 20 shown by Scobey in order to lessen the angle "c" ≈ 15 °. However, as the width "a" of the block is substantially increased, for example enough to lessen the angle "c" to less than 5 degrees, unwanted broadening of the beam diameter occurs and the beam becomes divergent. A collimated beam launched from a collimating lens, such as a quarter pitch GRIN lens in free space or in an unguided block of light transmissive material has this well-known Gaussian shape. Over a short distance the beam will exhibit a constricted region or waist, but over a greater distance the beam will diverge with an expanding beam diameter. This is exemplified in Fig. 3, wherein a Gaussian beam is shown.
This invention provides a solution to this problem and furthermore, achieves a significant and surprising advantage that simplifies the manufacture and assists in producing very precise multiplexing and/or demultiplexing devices.

Thus, it is an object of this invention to provide an optical demultiplexor that exhibits less PMD than in the prior art '683 patent.

It is a further object of the invention to provide a device that can simply and expediently be tuned during manufacture.

### Summary of the Invention

In accordance with the invention, a multiplexing or demultiplexing device is provided comprising:
a first lens for providing a first beam of light from an output end face of the first lens;
a first lens filter arrangement including:
   a first relay lens having a receiving/transmitting end face disposed a substantial optical distance from the output end face of the first lens, the optical distance being such that light exiting the output end face of the first lens and directed to the receiving/transmitting end face of the first relay lens becomes divergent at the receiving end face of the relay lens;
   a first filter disposed to receive a collimated beam from an output end face of the first relay lens, the output end face being at an opposite end of the first relay lens from the receiving/transmitting end face; and,
   a first focusing lens for receiving light that has propagated through the first filter and for focusing said light into an optical waveguide, the first filter disposed between the first relay lens and the first focusing lens; and,
a second lens filter arrangement including:
   a second relay lens having a receiving end face disposed a substantial optical distance from the output end face of the receiving/transmitting end face of the first relay lens, the optical distance being such that light exiting the receiving/transmitting end face of the first relay lens and directed to the receiving end face of the second relay lens becomes divergent at the receiving end face of the relay lens; and,
   a second filter disposed to receive a collimated beam from an output end face of the second relay lens
   a second focusing lens for receiving light that has propagated through the second filter and for focusing said light into an optical waveguide, the second filter disposed between the second relay lens and the second focusing lens.

In accordance with another aspect of the invention, a method of tuning an optical multiplexing or demultiplexing device during manufacture thereof is provided, comprising the steps of:
providing a first lens for providing a first beam of light from an output end face of the first lens;
providing a first lens filter arrangement including:
   a first relay lens having a receiving/transmitting end face disposed a substantial optical distance from the output end face of the first lens, the optical distance being such that light exiting the output end face of the first lens and directed to the receiving/transmitting end face of the first relay lens becomes divergent at the receiving end face of the relay lens;
   a first filter disposed to receive a collimated beam from an output end face of the first relay lens, the output end face being at an opposite end of the first relay lens from the receiving/transmitting end face; and,
   a first focusing lens for receiving light that has propagated through the first filter and for focusing said light into an optical waveguide, the first filter disposed between the first relay lens and the first focusing lens; and,
providing a second lens filter arrangement including:
   a second relay lens having a receiving end face disposed a substantial optical distance from the output end face of the receiving/transmitting end face of the first relay lens, the optical distance being such that light exiting the receiving/transmitting end face of the first relay lens and directed to the receiving end face of the second relay lens becomes divergent at the receiving end face of the relay lens; and,
   a second filter disposed to receive a collimated beam from an output end face of the second relay lens
   a second focusing lens for receiving light that has propagated through the second filter and for focusing said light into an optical waveguide, the second filter disposed between the second relay lens and the second focusing lens; and,
   adjusting the position of at least one of the first and second relay lenses such that an optical axis of the relay lens is off axis with an optical axis with a respective focusing lens it is optically coupled with, to tune a portion of the device.

In another aspect of the invention, there is provided, a method of tuning an optical device having a filter element sandwiched between two lenses each having an optical axis, comprising the step of:
relatively varying a position of the two optical axes of the two lenses such that they are offset and parallel to one another.

In yet another aspect of the invention, there is provided, an optical device having a filter element sandwiched between two lenses disposed to couple light into and out of the filter element, each filter having an optical axis, the two optical axes of the two lenses such that they are offset and parallel to one another.

Advantageously, the invention provides a device that allows angles of incidence upon an optical filter that are near normal, and at the same time provides a device that can be fine-tuned in a simple expedient manner without angularly varying components,.

### Brief Description of the Drawings

Exemplary embodiments of the invention will now be described in conjunction with the drawings in which:
Fig. 1 is a prior art diagram of an optical multiplexor demultiplexor having a light transmissive block and a plurality of input/output ports disposed on a same side of the block;
Fig. 2 is a prior art diagram of an alternative embodiment of the optical multiplexor demultiplexor of Fig. 1 having a light transmissive block and a plurality of input/output ports disposed on different sides of the light transmissive block;
Fig. 3 is a diagram depicting a Gaussian beam after exiting a collimating lens;
Fig. 4 is a diagram of a Gaussian beam recollimated by a relay lens;
Fig. 5 is a diagram of an exemplary embodiment in accordance with the invention of a three-port optical multiplexor/demultiplexor;
Fig. 6 is a detailed diagram of a portion of the embodiment shown in Fig. 5 wherein the tuning aspect of the optical circuit is exemplified; and,
Fig. 7 is a circuit diagram of a preferred embodiment of invention of a 1 x4 demultiplexor/multiplexor wherein all of the ports are disposed on a single side of the device.

### Detailed Description

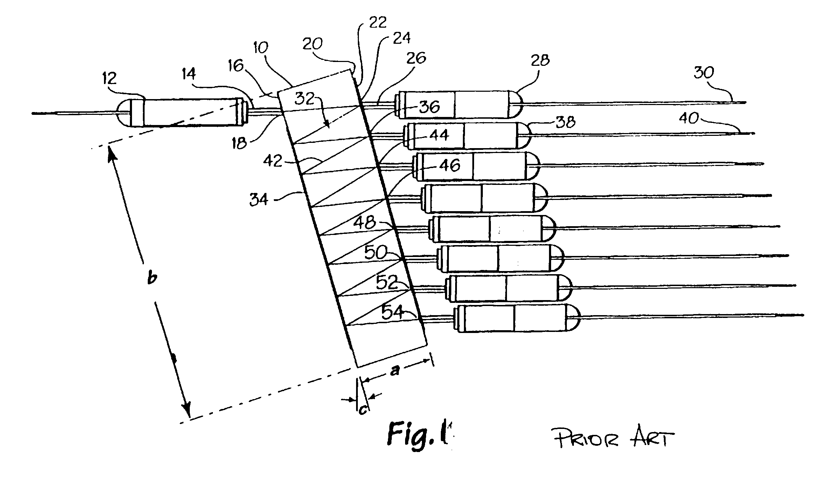

Turning now to Fig. 1, an optical multiplexor/demultiplexor is shown and is described in U.S. Patent No. 5,786,915 incorporated herein by reference, wherein a light transmissive block 10, having a width "a" for carrying light signals from one port to another is provided. In this circuit an input beam is launched into a GRIN collimator 12 and highly collimated light 14 is coupled into the block. The collimated light is said to have a divergence of not more than 0.15 degrees and the tilt angle "c" at which the collimated light enters the block is 0.15 degrees. Multi-wavelength light carried by an optical fibre is collimated by lens means 12, and directed through an optical port 18 in the surface 16 of the optical block 10, from which it passes within the optical block to the opposite surface 20 of the optical block. A graded wavelength all-dielectric narrow bandpass filter is carried on the filter 20 of the optical block. In this design, light directed toward the multilayer all dielectric filter is incident thereupon at an angle about 15 degrees from the normal to the plane of the filter. Unfortunately, polarization dependent loss (PDL) or PMD is significant at this angle of incidence and it is preferred to have an angle of incidence of even less than 5 degrees to the normal to minimize PMD. In some instances, with considerable effort and added expense, filters can be designed to overcome some PMD from light being launched into the filter at angles of more than 5 degrees from the normal. However, there are instances where even special efforts in filter design, cannot suitably overcome PMD associated with these filters.

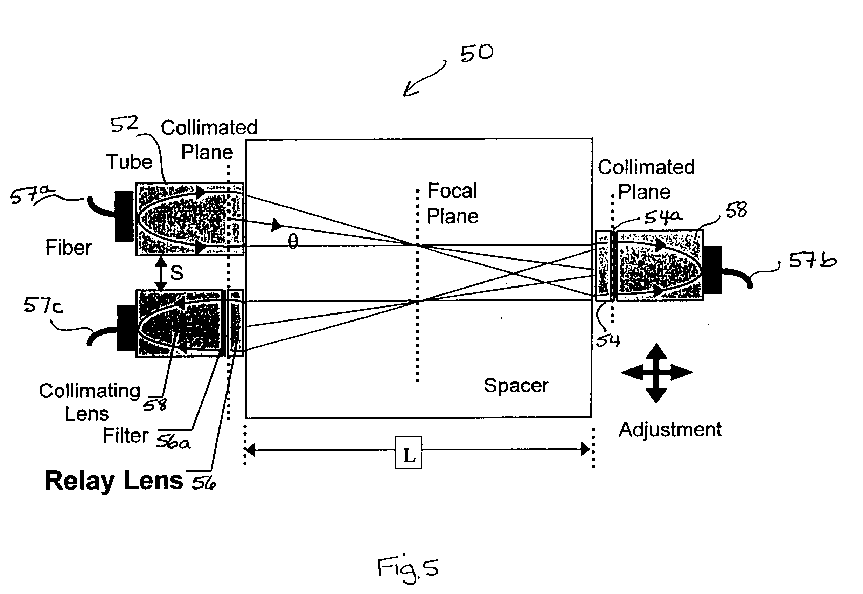

In Fig. 4 lens 30 is shown to be slightly larger than a quarter pitch.

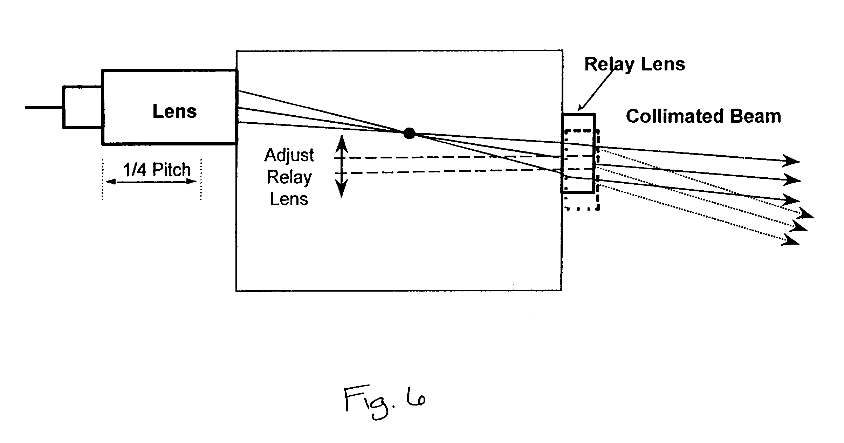

Turning now to Fig. 5 an embodiment of this invention is shown wherein a multplexor/demultiplexor has an angle of incidence upon the end face of filter closer to a normal angle of 90 degrees; this is achieved by providing a light transmissive block that is substantially wider than the block shown in the prior art device of Scobey. In Fig. 5 three lenses 52, 54 and 56 are coupled directly to a block 50 having a width "L". Lenses 54 and 56 are relay lenses and each have a filter element 54a and 56a respectively and a second quarter pitch focusing lens 58 coupled to respective filter elements. The relay lenses 54a and 56a are in this preferred embodiment GRIN lenses, and are polished to a length of less than a quarter pitch or a pitch suitable for reshaping a received expanding beam and providing a collimated beam to the filter element adjacent thereto.

In operation, the circuit of Fig. 5 functions in the following manner. An input multiplexed optical signal, comprising at least wavelengths λ1 and λ2 is launched into an input end of the device into a first optical fibre 57a. The beam is then reshaped by the lens 52 in such a manner as to provide a focused beam along a focal plane defined within the light transmissive block 50. Due to the Gaussian beam divergence, the beam continues to propagate and diverge until it is received and transformed by the relay lens 54 into a collimated beam of light presented by the relay lens 54 to the dichroic filter element 54a which is designed to pass light about a central wavelength λ1 within a band having a predetermined width, and to reflect light centred about a central wavelength λ2 within a predetermined wavelength band. Hence, the lenses 52 and 54 are selected and disposed a predetermined distance, i.e., the block width L, such that light launched into the lens 52 is collimated at the filter 54a receiving end face. The presence of the relay lens is required to reshape the beam, due to the great distance "L" the beam must propagate along the spacer block; the distance L is selected such that an angle of incidence of the beam upon the filter 54a is as close to the normal angle of incidence as possible or is at least below a predetermined maximum selected angle, for example and preferably 5 degrees from the normal. Of course, as L increases, the angle of incidence approaches the normal angle of incidence.

As was mentioned, light of wavelength centered about λ1 is passed through the filter 54a. This light is subsequently focused by the substantially quarter pitch focusing/collimating GRIN lens 58 and is directed into the optical fibre 57b. Light reflected from the filter 54a, centred about λ2 is directed via reflection to the lens filter arrangement 56, 56a, 58, and 57c. Light reflecting from the filter 54a is focused at the focal plane within the spacer block and is refocused into a collimated beam at the second filter element 56a; after passing therethrough, the beam of light centred about λ2 is focused into the optical fibre 57c. Any other wavelengths that may be present outside the band centred about the wavlelength λ2, for example, light centred about λ3 is reflected, and can be directed to subsequent lens filter elements not shown in this figure.

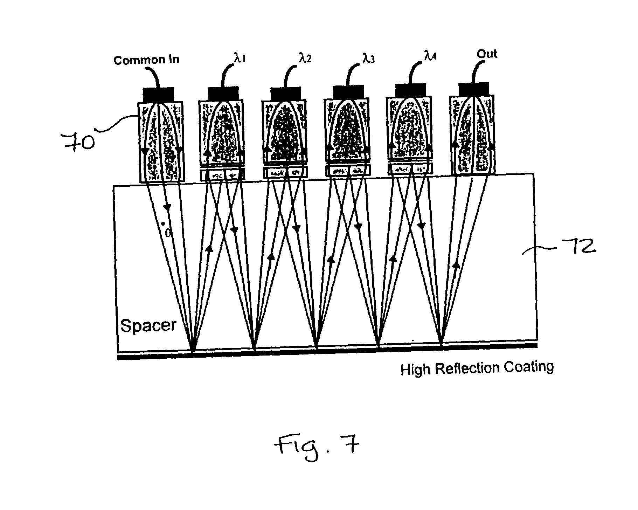

Since the filters 54a and 56a are angle sensitive, that is, pass or reflect wavelengths of light dependent upon an angle of incidence, ensuring a desired angle of incidence is of paramount importance. The provision of the relay lenses 54 and 56 provide a means of fine tuning the angle of incidence by moving one or more of the lenses 54 or 56 laterally. The effect of laterally shifting the position of the relay lens is shown in Fig. 6 whereby shifting the relay lens shown in dotted outline results in the angle at which the beam is incident upon the filter being increased, shown by the dotted rays. Conversely, if the relay lens is disposed laterally, but oppositely, the beam will be directed upward instead of downward. Here, a change of lateral direction by approximately 0.85nm results in a one degree of change in incident angle, however this depends on the type of lens used. Thus, this method allows for very fine tuning of incident angles and hence, very fine tuning of wavelengths that will be passed or reflected.

Turning now to Fig. 7, a 1x4 multiplexor/demultiplexor is shown having all input/output ports on a same side of the device. A first optical fibre labeled Common In is coupled to a GRIN lens 70 having a pitch greater than 0.25such that a beam exiting the lens is substantially focused at a mirror or reflective surface at an opposite end of a spacer block 72. Since this is a folded configuration, the width of the block 72 is approximately one half of the width of the block 50 in Fig. 5. Of course, to lessen the angle of incidence upon a subsequent sequential filter, the width of the block can be increased accordingly.

A series of sequential lens arrangements, each consisting of a relay lens, a filter coated to pass a particular wavelength band at a predetermined angle, and reflect others, and a focusing lens, preferably a quarter pitch GRIN lens, are provided. Advantageously, the relay lenses may be individually adjusted laterally, in order to fine-tune the filter so that it passes a particular centre wavelength to its corresponding optical fibre. Sequentially λ1, λ2, λ3, and λ4 are demultiplexed. In a reverse direction, if signals having these wavelengths are launched into respective waveguides, these signals will be combined and output on the optical fibre labeled Common In, wherein the input waveguide serves as an output waveguide.

In all of the embodiments shown heretofore, in accordance with the invention, fine and alignment can be achieved by laterally offsetting one or more of the relay lenses. This obviates the necessity to implement angular alignment of components. Furthermore, a pre-manufactured lens-sleeve-fibre assembly, commonly used in a plurality of other optical circuits and components can be utilized with a particular filter and relay lens.

Numerous other embodiments may be envisaged, without departing from the spirit and scope of the invention, for example, the device shown in the drawings, can be manufactured without the light transparent block of material, as long as the lenses and lens-filter arrangements are relatively non-movable; this can be achieved by providing a frame or container within which the components are secured.

## Claims

1. A multiplexing or demultiplexing device comprising:
a first lens for providing a first beam of light from an output end face of the first lens;
a first lens filter arrangement including:
a first relay lens having a receiving/transmitting end face disposed a substantial optical distance from the output end face of the first lens, the optical distance being such that light exiting the output end face of the first lens and directed to the receiving/transmitting end face of the first relay lens becomes divergent at the receiving end face of the relay lens;
a first filter disposed to receive a collimated beam from an output end face of the first relay lens, the output end face being at an opposite end of the first relay lens from the receiving/transmitting end face; and,
a first focusing lens for receiving light that has propagated through the first filter and for focusing said light into an optical waveguide, the first filter disposed between the first relay lens and the first focusing lens; and,
a second lens filter arrangement including:
a second relay lens having a receiving end face disposed a substantial optical distance from the output end face of the receiving/transmitting end face of the first relay lens, the optical distance being such that light exiting the receiving/transmitting end face of the first relay lens and directed to the receiving end face of the second relay lens becomes divergent at the receiving end face of the relay lens; and,
a second filter disposed to receive a collimated beam from an output end face of the second relay lens
a second focusing lens for receiving light that has propagated through the second filter and for focusing said light into an optical waveguide, the second filter disposed between the second relay lens and the second focusing lens.

2. A device as defined in claim 1, further comprising a block of light transmissive material for coupling with the first lens, the first relay lens, and the second relay lens.

3. A device as defined in claim 2, wherein the first and second relay lens are GRIN lenses and are disposed at locations and are each of a length such that a divergent beam received is transformed to a collimated beam.

4. A device as defined in claim 3 wherein at least one of the first and second relay lenses and a respective first and second focusing lens have offset optical axes.

5. A device as defined in claim 2, wherein the first and second lens filter arrangements are both coupled to a same end face of the block of light transmissive material.

6. A device as defined in claim 5, wherein a reflective surface is provided at an end face of the light transmissive block, opposite to where the first and second lens filter arrangements are coupled.

7. A device as defined in claim 6, wherein the first lens is at a same end of the light transmissive block as the first and second lens filter arrangements.

8. A device as defined in claim 1, wherein the first lens is a non-collimating lens which provides a substantially convergent output beam.

9. A device as defined in claim 8, wherein the first lens is a substantially focusing lens.

10. A device as defined in claim 9, wherein the first lens is comprised of two lenses.

11. A device as defined in claim 2, wherein the a first lens filter arrangement and the second lens filter arrangement are at opposite ends of the light transmissive block.

12. A method of tuning an optical multiplexing or demultiplexing device during manufacture thereof, comprising the steps of:
providing a first lens for providing a first beam of light from an output end face of the first lens;
providing a first lens filter arrangement including:
a first relay lens having a receiving/transmitting end face disposed a substantial optical distance from the output end face of the first lens, the optical distance being such that light exiting the output end face of the first lens and directed to the receiving/transmitting end face of the first relay lens becomes divergent at the receiving end face of the relay lens;
a first filter disposed to receive a collimated beam from an output end face of the first relay lens, the output end face being at an opposite end of the first relay lens from the receiving/transmitting end face; and,
a first focusing lens for receiving light that has propagated through the first filter and for focusing said light into an optical waveguide, the first filter disposed between the first relay lens and the first focusing lens; and,
providing a second lens filter arrangement including:
a second relay lens having a receiving end face disposed a substantial optical distance from the output end face of the receiving/transmitting end face of the first relay lens, the optical distance being such that light exiting the receiving/transmitting end face of the first relay lens and directed to the receiving end face of the second relay lens becomes divergent at the receiving end face of the relay lens; and,
a second filter disposed to receive a collimated beam from an output end face of the second relay lens
a second focusing lens for receiving light that has propagated through the second filter and for focusing said light into an optical waveguide, the second filter disposed between the second relay lens and the second focusing lens; and,
adjusting the position of at least one of the first and second relay lenses such that an optical axis of the relay lens is off axis with an optical axis with a respective focusing lens it is optically coupled with, to tune a portion of the device.

13. A method of tuning an optical device having a filter element sandwiched between two lenses each having an optical axis, comprising the step of:
relatively varying a position of the two optical axes of the two lenses such that they are offset and parallel to one another.

14. A method as defined in claim 13, wherein the parallel and offset lenses are affixed in this position, after the relative position is varied.

15. A method as defined in claim 14, wherein one of the two lenses is a relay lens.

16. An optical device having a filter element sandwiched between two lenses disposed to couple light into and out of the filter element, each filter having an optical axis, the two optical axes of the two lenses such that they are offset and parallel to one another.

17. An optical device as defined in claim 16, wherein the two lenses and the filter element are adhesively coupled to one another.

18. A multiplexing or demultiplexing device comprising:
a first lens for providing a first beam of light from an output end face of the first lens;
a first relay lens having a receiving/transmitting end face disposed a substantial optical distance from the output end face of the first lens, the optical distance being such that light exiting the output end face of the first lens and directed to the receiving/transmitting end face of the first relay lens becomes divergent at the receiving end face of the relay lens;
a first filter disposed to receive a collimated beam from an output end face of the first relay lens, the output end face being at an opposite end of the first relay lens from the receiving/transmitting end face;
a second relay lens having a receiving end face disposed a substantial optical distance from the output end face of the receiving/transmitting end face of the first relay lens, the optical distance being such that light exiting the receiving/transmitting end face of the first relay lens and directed to the receiving end face of the second relay lens becomes divergent at the receiving end face of the relay lens; and,
a second filter disposed to receive a collimated beam from an output end face of the second relay lens.
